# EUROPÄISCHE PATENTANMELDUNG

(11) **EP 3 346 181 A1**
(43) Veröffentlichungstag der Anmeldung: **11.07.2018**
(21) Anmeldenummer: 18156493.1
(22) Anmeldetag: 08.09.2016
(51) Int. Cl.: F21K 9/61, B60Q 1/00, F21S 8/00, F21V 8/00, F21Y 115/10

(54) **LINIENLEUCHTE**

(30) Priorität: 10.09.2015 DE 102015115265
(62) Teilanmeldung aus: 16187762.6
(71) Anmelder: SCHOTT AG, 55122 Mainz (DE)
(72) Erfinder: SCHABACKER, Stephan, 60327 Frankfurt am Main (DE); KAPPEL, Markus, 55595 Roxheim (DE); SENNER, Eric, 55546 Hackenheim (DE)
(74) Vertreter: Blumbach · Zinngrebe Patent- und Rechtsanwälte

(57) **Zusammenfassung**

Die Erfindung betrifft eine Linienleuchte (1) bei welcher ein transparenter Lichtleiter (5) aus Glas gegenüber einer dunklen Fläche (21) in einem Profil (2) eingelassen ist oder bei welcher ein Glasfaserbündel (17) mit einem eingefärbten Schlauch (23) verwendet wird.

## Beschreibung

### Gebiet der Erfindung

Die Erfindung betrifft eine seitenemittierende Linienleuchte. Insbesondere betrifft die Erfindung eine Linienleuchte welche als Konturenbeleuchtung für Fahrzeuge, insbesondere als Außenbeleuchtung, Verwendung findet. Im Speziellen betrifft die Erfindung ein Trittbrett mit einer Linienleuchte.

Die erfindungsgemäße Linienleuchte kann aber auch für andere Anwendungen, insbesondere im Gebäude- und Möbelbereich Verwendung finden.

### Hintergrund der Erfindung

Konturenbeleuchtungen finden insbesondere durch die Verbreitung der LED-Technik vermehrt Verwendung. Dies gilt unter anderem auch für den Fahrzeugbereich.

Das Dokument DE 20 2008 011 063 U1 (Schott AG) zeigt eine Beleuchtungsvorrichtung für Fahrzeuge, welche insbesondere als Trittbrettbeleuchtung vorgesehen ist.

Nachteilig an bekannten Konturbeleuchtungen für Fahrzeuge ist zumeist deren aufwendiger Einbau. So erfordert beispielsweise die in vorstehendem Dokument beschriebene Matte einen Einbau in ein Gehäuse. Dieses muss in der Regel auch noch wasser- und staubdicht ausgestaltet sein.

Auch ist es schwierig, mit derartigen Systemen eine konturenscharfe, abgegrenzte linienförmige Leuchte bereit zustellen, welche bei Tageslicht kaum sichtbar ist.

Das Dokument WO 2007/047304 zeigt einen mittels eines Klemmelements in eine Nut eingeklemmten Lichtleiter. Das Dokument EP 1 122 487 A2 zeigt Bauelemente mit einer schlauchförmigen Leuchte, die durch ein plattes oder kreiszylinderförmiges Lichtübertragungsmedium, welches eingefärbt sein kann, Licht abstrahlt.

### Aufgabe der Erfindung

Der Erfindung liegt demgegenüber die Aufgabe zugrunde, eine Linienleuchte bereit zu stellen, welche robust ist und auf einfache Weise eingebaut werden kann.

Weiter soll eine konturenscharfe Beleuchtung gewährleistet sein und im nicht-beleuchteten Zustand soll die erfindungsgemäße Linienleuchte möglichst wenig sichtbar sein.

### Zusammenfassung der Erfindung

Die Aufgabe der Erfindung wird bereits durch eine Linienleuchte nach einem der unabhängigen Ansprüche gelöst.

Bevorzugte Ausführungsformen und Weiterbildungen der Erfindung sind dem Gegenstand der jeweiligen Unteransprüche zu entnehmen.

Die Erfindung betrifft gemäß einer ersten Ausführungsform eine Linienleuchte, welche ein seitenemittierendes Glasfaserkabel umfasst, welches in einem Schlauch angeordnet ist.

Ein derartiges seitenemittierendes Glasfaserkabel ist beispielsweise in der WO 2009/100834 A2 gezeigt. Ein Glasfaserkabel hat gegenüber der ersten Ausführungsvariante der Erfindung den Vorteil, dass es flexibel ist.

Gemäß der Erfindung ist der Schlauch dunkel eingefärbt, insbesondere hatte dieser im sichtbaren Bereich des Lichts eine mittlere Transmission von weniger als 40 %, vorzugsweise von weniger als 30 %.

Diese Ausführungsvariante geht mithin einen anderen Weg, um im nicht-beleuchteten Zustand eine nahezu unsichtbare Ausgestaltung der Linienleuchte zu ermöglichen.

Statt eines dunklen Hintergrundes ist der Schlauch, mit welchem das Glasfaserkabel ummantelt ist, derart eingefärbt, dass dieser im nicht-beleuchteten Zustand nahezu schwarz erscheint und damit nahezu unsichtbar ist.

Insbesondere hat das Material des Schlauchs im L*a*b-Farbraum ein L*-Wert von unter 40, vorzugsweise von unter 30 und besonders bevorzugt von unter 15.

Der a*- und der b*-Wert liegt vorzugsweise bei unter 20, besonders bevorzugt bei unter 10.

Der schwarze Mantel kann auch einem Kunststoff, insbesondere einem Polyethylen, Polypropylen oder aus einem Silikon oder aus PVC bestehen. Die Schwarzfärbung kann beispielsweise durch Einmischen von Rußpartikeln erzielt werden.

Bei einer anderen Ausführungsvariante der Erfindung, insbesondere bei welcher eine angrenzende Aufnahme nicht schwarz ist, ist der Schlauch in einer Farbe eingefärbt, welcher der Farbe einer angrenzenden Aufnahme oder eines angrenzenden Verkleidungsteils entspricht.

Der Schlauch kann beispielsweise in ein Profil aber auch in eine Verkleidung, beispielsweise eine Wand-, Türen- oder Deckenverkleidung eines Fahrzeugs oder Gebäudes eingelassen sein, welche eine bestimmte Farbe hat.

Der Schlauch hat wiederum vorzugsweise im sichtbaren Bereich eine mittlere Transmission von weniger als 40 %, vorzugsweise von weniger als 30 %.

Über eine Einfärbung, welche der Farbe der angrenzenden Aufnahme entspricht, wird eine nahezu unsichtbare Integration des Glasfaserkabels ermöglicht.

Insbesondere unterscheidet sich der a*- und/oder der b*-Wert im L*a*b*-Farbraum von angrenzender Aufnahme bzw. angrenzendem Verkleidungsteil und Schlauch um weniger als 10, vorzugsweise weniger als 5.

Neben einer bunten oder schwarzen Einfärbung ist gemäß einer Ausführungsform der Erfindung vorgesehen, den Schlauch in einer von Schwarz verschiedenen unbunten Farbe einzufärben, insbesondere silbern. Hierzu können zum Bespiel Aluminiumoxidpartikel verwendet werden.

Insbesondere können Pigmentpartikel mit einer mittleren Partikelgröße von 5 nm bis 10 µm, bevorzugt von 0,1 µm bis 10 µm, ganz besonders bevorzugt von 0,5 µm bis 5 µm verwendet werden.

Zum Einfärben werden gemäß einer Ausführungsform anorganische Farbmittel verwendet, welche als Farbkonzentrate dem Material des Schlauchs zugesetzt werden können.

Diese können zwischen 2 bis 60% Pigmentanteil umfassen, die mit dem Trägermaterial gemischt sind.

Das Trägermaterial kann beispielsweise ein Polyethylen, insbesondere LLDPE (Linear Low Density Polyethylene), ein Polypropylen oder ein thermoplastisches Polyurethan sein.

Das Farbkonzentrat (sog. Masterbatch) wird in einer Menge von 0,1 - 20 %, vorzugsweise von 1 bis 10 % (Gewichts%) am Extruder beigemischt.

Als Pigmente können sowohl sphärische Pigmente als auch rundlich bis flache Pigmente, insbesondere plättchenförmige Pigmente, verwendet werden, die wie kleine Spiegel wirken.

Das Erscheinungsbild der späteren Anwendung ist in hohem Maße von den Pigmenten abhängig. Hiervon ist besonders die Homogenität (Abstrahleffekt) betroffen.

Durch flächige Pigmente kann beim Durchscheinen des Schlauchs ein besonderer Effekt hervorrufen werden.

Je nach Blickrichtung auf den Schlauch erscheint dieser durch die Ausrichtung der Spiegelflächen der Pigmente dunkler oder heller.

Bei einer weiteren Ausführungsform wird eine Strukturierung im Kabelmantel durch die Anordnung und Verteilung der Pigmente erzeugt.

Bei einer Weiterbildung der Erfindung werden bei Extrusion des Schlauchs zumindest zwei verschiedene Materialien coextrudiert. Der Schlauch besteht so aus zumindest zwei verschiedenen Materialien.

Insbesondere kann ein Teil des Mantels aus einem reflektierenden Kunststoff ausgebildet werden, welcher später die Rückseite des eingesetzten Schlauchs bildet.

Eine Reflexion kann auch eine Lackierung oder ein Bekleben mit Folie erreicht werden.

Im Fall eines dunklen, vorzugsweise schwarzen, Schlauchs, hat bei einer bevorzugten Ausführungsform der Erfindung im L*a*b*-Farbraum der Schlauch ein L*-Wert von unter 40, vorzugsweise von unter 30 und besonders bevorzugt von unter 15.

Ansonsten kann das Glasfaserkabel auf ähnliche Weise eingebaut werden wie der zuvor beschriebene Lichtleiter aus transparentem Glas.

Insbesondere ist denkbar, den Schlauch mittels zumindest eines Montageelements formschlüssig in ein Profil einzuclipsen oder einzuschieben.

Vorzugsweise ist auch das Glasfaserkabel gegenüber dem angrenzenden Profil rückversetzt, insbesondere um zumindest 0,5 mm, vorzugsweise um zumindest 1 mm.

Vorzugsweise hat auch das Glasfaserkabel einen Durchmesser von 0,2 bis 10 mm, bevorzugt von 0,5 bis 5 mm und besonders bevorzugt von 2 bis 4 mm.

Die erfindungsgemäße Linienleuchte findet insbesondere in Fahrzeugen Verwendung. Dabei ist auch denkbar, das Licht einer RGB-Lichtquelle einzukoppeln, so dass die Lichtfarbe verändert werden kann.

Die Erfindung betrifft des Weiteren eine Linienleuchte, insbesondere eine Linienleuchte, wie sie zuvor beschrieben wurde, welche ein seitenemittierendes Glasfaserkabel umfasst, das in einem Schlauch angeordnet ist. Gemäß der Erfindung ist der Schlauch bunt eingefärbt.

Es handelt sich bei dieser Ausführungsform der Erfindung also um eine Einfärbung des Schlauchs mit bunten Farbpartikeln.

Insbesondere hat das Material des Schlauchs im L*a*b*-Farbraum eine Buntheit C*_{ab} von >10, vorzugsweise von >25 und besonders bevorzugt von >30. Die Buntheit C*_{ab} ist definiert als die Wurzel der Summe der Quadratzahlen von a* und b*.

Bei dieser Ausführungsform der Erfindung, also der Ausführungsform mit einem bunten Schlauch, umfasst die Linienleuchte vorzugsweise eine Lichtquelle, insbesondere eine LED-Lichtquelle, deren Wellenlänge an die Farbe des Schlauchs angepasst ist.

Es hat sich herausgestellt, dass im Unterschied zu einer unbunten Einfärbung des Schlauchs die Verwendung beispielsweise eine Weißlicht-Lichtquelle zu unerwünschten Verfärbungen im Randbereich des Schlauchs führt.

Vorzugsweise wird eine Lichtquelle verwendet, die eine dominante Wellenlänge emittiert, die sich maximal 30 nm, vorzugsweise maximal 20 nm, von der Wellenlänge unterscheidet, die der Farbe des Schlauchs entspricht.

Die Lichtquelle emittiert also in etwa in derselben Wellenlänge, welche der Farbe des Schlauchs entspricht.

Vorzugsweise wird eine Lichtquelle verwendet, welche genau ein Emissionsmaximum hat. Es wird also vorzugsweise keine Lichtquelle verwendet, deren Farbe sich aus zwei oder mehr Wellenlängen maximal zusammensetzt.

Es wird insbesondere eine Lichtquelle verwendet, die ein Emissionsmaximum hat, das im Spektrum der Lichtquelle eine Standardabweichung hat, bei welcher σ in einem Intervall von maximal +/- 50 nm, vorzugsweise von maximal +/-25 nm, liegt.

Es wird also vorzugsweise eine Lichtquelle verwendet, die in einem engen Spektrum abstrahlt. Insbesondere kann auch eine LED-Lichtquelle verwendet werden, welche im Wesentlichen monochromatisch abstrahlt.

So kann erreicht werden, dass auch bei Verwendung eines bunt eingefärbten Schlauchs die Linienleuchte Licht mit einem sehr einheitlichen Farbeindruck emittiert.

Wegen der Robustheit kann die Linienleuchte insbesondere im Außenbereich verwendet werden. Aber auch eine Verwendung als Konturenbeleuchtung im Innenraum ist denkbar. Dies gilt im Besonderen für die Ausführungsvariante als seitenemittierendes Glasfaserkabel. Dieses kann beispielsweise in der Innenverkleidung derart eingesetzt werden, dass es wie eine Übergangsnaht einer Bespannung aus beispielsweise Stoff oder Leder aussieht. Im eingeschalteten Zustand ergibt sich eine konturenscharfe Beleuchtung, wohingegen im nicht-beleuchteten Zustand die Linienleuchte nahezu unsichtbar ist.

Weitere Anwendungsmöglichkeiten sind beispielsweise aber auch medizinische Geräte, insbesondere Konturenbeleuchtungen von Behandlungsstühlen, Operationssälen, Tomographen, Röntgengeräten, etc.

Weiter können, insbesondere als Außenbeleuchtung, Linienleuchten mit einer Länge von über 1 m, vorzugsweise von über 3 m bereit gestellt werden. Hierdurch kann beispielsweise auch eine Konturbeleuchtung für LKWs bereit gestellt werden.

Denkbar ist auch eine Verwendung als Gangbeleuchtung eines Flugzeugs oder Schiffs, als eine beleuchtete Fensterkontur, als eine Konturenbeleuchtung im Küchenbereich oder bei einem Möbelstück. Weiter können beispielsweise Bedienelemente oder Sitze beleuchtet werden. Denkbar sind auch Schaltschränke, Spielekonsolen, Öfen, Kamine, Möbel und Designelemente an Leuchten selbst.

Schließlich ist auch denkbar Funktions- oder Statusanzeigen als Linienleuchte auszugestalten. Weiter ist denkbar die Nachtbeleuchtung in einem Fahrzeugcockpit teilweise aus erfindungsgemäßen Linienleuchten auszubilden.

Die Erfindung betrifft des Weiteren eine Tür, Wand- oder Deckenverkleidung eines Fahrzeugs, welche eine vorstehend beschriebene Linienleuchte mit einem in einen Schlauch eingebrachten Glasfaserbündel umfasst.

Vorzugsweise ist der Schlauch in eine Nut eingeklemmt oder eingeklebt.

Es ist insbesondere vorgesehen, dass ein eingefärbter, insbesondere bunt eingefärbter, Schlauch im ausgeschalteten Zustand der Linienleuchte an die Farbe des angrenzenden Verkleidungsteils angepasst ist.

Im eingeschalteten Zustand wird gemäß einer Ausführungsform Licht derselben Farbe emittiert.

Bei einer anderen Ausführungsform, für welche vorzugsweise ein unbunt, insbesondere schwarz oder silbern, eingefärbter Schlauch verwendet wird, emittiert die Linienleuchte Licht einer anderen Farbe und die Linienleuchte tritt mit dem Einschalten optisch hervor.

### Kurzbeschreibung der Zeichnungen

Der Gegenstand der Erfindung soll im Folgenden bezugnehmend auf die Zeichnungen Fig. 1 bis Fig. 8 näher erläutert werden.
- Fig. 1: zeigt eine Schnittansicht einer Ausführungsform einer Linienleuchte, welche nicht Gegenstand der Erfindung ist.
- Fig. 2: zeigt ein nicht erfindungsgegenständliches Ausführungsbeispiel in einer perspektivischen Ansicht.
- Fig. 3: Bezugnehmend auf Fig. 3 soll die Nicht erfindungsgegenständliche Ausführungsvariante mit einem transparenten Lichtleiter aus Glas näher erläutert werden.
- Fig. 4: Bezugnehmend auf Fig. 4 soll die Ankopplung des Lichtes an den transparenten Lichtleiter aus Glas erläutert werden
- Fig. 5: zeigt eine alternative Ausführungsform einer Einkopplung von Licht.
- Fig. 6: Bezugnehmend auf Fig. 6 soll die Erfindung erläutert werden, bei welcher ein Glasfaserkabel, das flexibel ist, verwendet wird.
- Fig. 7: zeigt in einer schematischen Darstellung, wie eine LED-Lichtquelle direkt an einen Lichtleiter aus Glas angekoppelt ist.
- Fig. 8: ist eine schematische Darstellung einer mit einer Verkleidung versehenen Fahrzeugtür, in welche ein seitenemittierendes Glasfaserkabel eingesetzt ist.

### Detaillierte Beschreibung der Zeichnungen

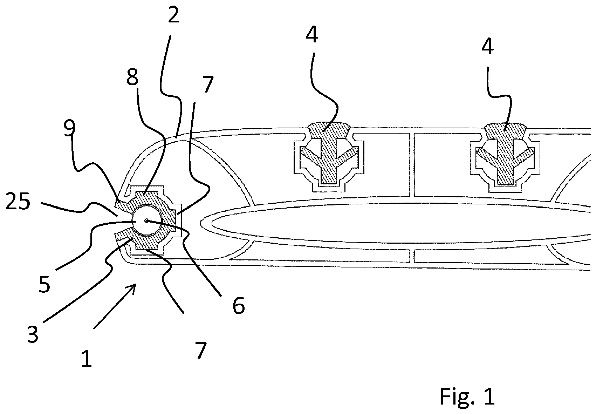

Fig. 1 zeigt in einer ersten Ausführungsform eine Schnittansicht einer nicht erfindungsgemäßen Linienleuchte 1.

Die Linienleuchte 1 ist in diesem Ausführungsbeispiel als Trittbrett ausgestaltet und umfasst ein Profil 2, welches insbesondere aus Aluminium ausgebildet sein kann. Es handelt sich um ein Hohlkammerprofil.

In das Profil 2 eingelassen sind unter anderem auch Trittleisten 4 aus Kunststoff, welche als Trittschutz dienen und die Gefahr des Verkratzens des angrenzenden Profils 2 reduzieren.

Um eine Linienleuchte bereit zu stellen, ist an einer Seite des Profils 2 ein Lichtleiter aus Glas 5 mittels eines Montageelements 3 formschlüssig in einer entsprechenden Aussparung des Profils 2 eingelassen. Dieser kann beispielsweise eingeschoben werden.

Der Lichtleiter 5 aus Glas umfasst in diesem Ausführungsbeispiel eine Farbglasseele 6, insbesondere aus Weißglas. Über die Farbglasseele 6 wird Licht zur Seite hin über die Öffnung 25 ausgekoppelt.

Das Montageelement 3 ist als Kunststoffprofil ausgebildet und umfasst Formschlusselemente 8, welche in korrespondierenden Aussparungen 7 des Profils 2 sitzen.

Der Lichtleiter 5 aus Glas ist gegenüber dem angrenzenden Profil 2 rückversetzt, was diesen vor Beschädigungen schützt.

Ansonsten bildet der Lichtleiter 5 aus Glas unmittelbar die Lichtaustrittsfläche, durch welche das Licht durch die Öffnung 25 zu sehen ist.

Das Montageelement 3 hat des Weiteren noch Flügel 9, welche über den Lichtleiter 5 aus Glas hinausragen, was diesen zusätzlich vor Beschädigungen schützt.

Durch das Montageelement 3, welches den Lichtleiter 5 um zumindest 270° umschließt wird der Öffnungswinkel der Linienleuchte gegenüber einem Betrachter begrenzt. Dieser liegt bei unter 90°.

In diesem Ausführungsbeispiel ist das als Kunststoffprofil ausgebildete Montageelement 3 schwarz.

Aufgrund der transparenten Ausgestaltung des Lichtleiters 5 sieht der Betrachter im nichtbeleuchten Zustand das schwarze dahinterliegende Montagelement 3, so dass der Lichtleiter 5 im nicht-beleuchteten Zustand nahezu unsichtbar ist.

Die Linienleuchte sieht vielmehr einer eingelassenen Trittleiste 4 aus Kunststoff ähnlich.

Es versteht sich, dass bei dieser Ausführungsform der Erfindung, welche ein Trittbrett betrifft, der Lichtleiter 5 im eingebauten Zustand seitlich angeordnet ist, da sich ansonsten Schmutz in dem Trichter ansammeln könnte, welcher durch das Montageelement 3 gebildet wird.

Für einen Einbau auf der Oberseite ist denkbar, den Trichter der durch die Öffnung 25 gebildet wird, durch ein transparentes Kunststoffbauteil zu verschließen (nicht dargestellt).

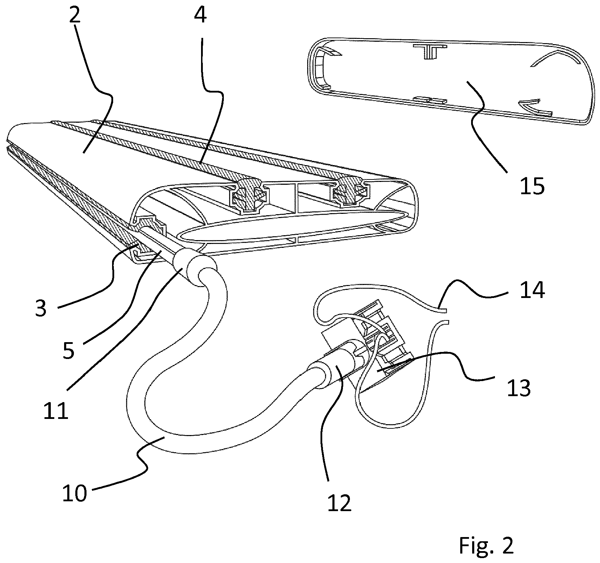

Fig. 2 zeigt in einer perspektivischen Ansicht eine nicht erfindungsgegenständliche Linienleuchte 1, welche ebenfalls als Trittbrett ausgebildet ist.

Zu erkennen ist das Profil 2 aus Metall, in welches die Trittleisten 4 eingelassen sind.

Der über das Montageelement 3 formschlüssig mit dem Profil 2 verbundene Lichtleiter 5 ist über einen flexiblen Lichtleiter 10 mit einer LED-Lichtquelle 13 verbunden.

Der flexible Lichtleiter 10 ist hierzu an seinen Enden mit jeweils einer Hülse 11, 12 terminiert. So kann beispielweise eine Steckverbindung bereit gestellt werden.

Die LED-Lichtquelle 13 ist vorzugsweise wasserdicht ausgebildet. Über die Kabel 14 wird die LED-Lichtquelle 13 mit Strom versorgt.

Da die LED-Lichtquelle 13 abgewinkelt eingesetzt werden kann, kann der Lichtleiter 5 nah am Seitenrand des Profils 2 angeordnet sein.

Das Profil 2 wird im fertig montierten Zustand mit der Kappe 15 verschlossen. In der Kappe 15 ist sodann die LED- Lichtquelle 13, sowie der flexible Lichtleiter 10 zur Verbindung angeordnet. Zu sehen ist mithin nur der Lichtleiter 5.

Diese Ausführungsvariante der Erfindung ermöglicht eine sehr einfache, aber robuste und wetterfeste Ausgestaltung eines Trittbretts mit einer Konturbeleuchtung, welche im unbeleuchteten Zustand nahezu unsichtbar ist.

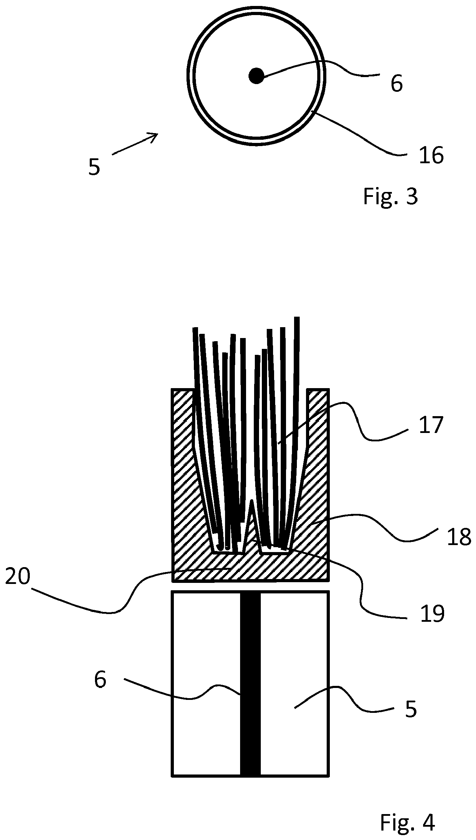

Fig. 3 zeigt, schematisch dargestellt, den verwendeten Lichtleiter 5 aus Glas.

Dieser umfasst eine Farbglasseele 6, insbesondere aus Weißglas.

Weiter umfasst der Lichtleiter 5 ein Hüllmaterial 16, welches eine niedrigere Brechzahl als das Kernglas aufweist, so dass hierdurch eine Totalreflektion erreicht wird.

Über die Farbglasseele 6 wird Licht zur Seite hin ausgekoppelt, indem die Farbglasseele 6 als Streuzentrum wirkt.

Bezugnehmend auf Fig. 4 soll schematisch die Einkopplung von Licht in den Lichtleiter 5 aus Glas erläutert werden.

Es wird als flexibler Lichtleiter ein Glasfaserbündel 17 verwendet, welches in der Regel in einem Schlauch (nicht dargestellt) angeordnet ist.

Zum Terminieren des Faserbündels 17 wird am Ende des Bündels der Schlauch entfernt und die einzelnen Glasfasern des Glasfaserbündels 17 werden in die Hülse 18 eingefüllt, welche zuvor mit einem transparenten optischen Klebstoff befüllt wurde.

Aus dem Boden 20 der Hülse steht gegenüber der Farbglasseele 6 ein Dorn 19 hervor, welcher beim Einbringen des Glasfaserbündels die Faser im Bereich der Farbglasseele 6 die einzelnen Glasfasern verdrängt, so dass kein oder nur wenig Licht direkt in die Farbglasseele 6 eingekoppelt wird.

Auf diese Weise wird eine inhomogene Abstrahlung im Randbereich vermieden.

Es versteht sich, dass weitere Kopplungselemente zum Koppeln von Hülse 18 und Lichtleiter 5 in dieser schematischen Zeichnung nicht dargestellt sind. Dies betrifft insbesondere Formschluss- oder Klemmelemente.

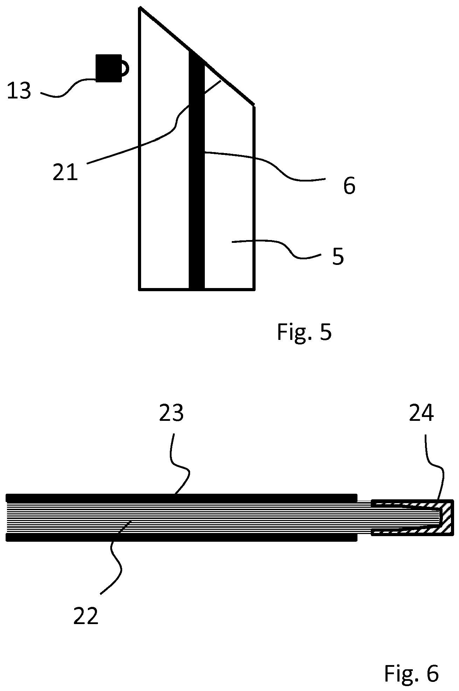

Fig. 5 zeigt eine alternative Ausführungsform, bei welcher der Lichtleiter 5 aus Glas mit der Farbglasseele 6 am Ende abgeschrägt ist. Licht der LED-Lichtquelle 13 wird von der Seite in den Lichtleiter 5 eingestrahlt und über eine Totalreflektion an der Fläche 21 umgelenkt und entlang des Lichtleiters 5 weitergeleitet.

Diese Ausführungsvariante ermöglicht gegenüber der in Fig. 2 dargestellten Ausführungsvariante eine noch kompaktere Ausgestaltung, geht aber in der Regel mit höheren Lichtverlusten und einer inhomogeneren Ausleuchtung im Randbereich einher.

Fig. 6 zeigt, schematisch dargestellt, eine erste Ausführungsform der Erfindung, bei welcher ein flexibles Glasfaserkabel 22 verwendet wird, um Licht zur Seite hin auszustrahlen.

Das Glasfaserkabel 22 ist über eine Hülse 24 an eine LED-Lichtquelle (nicht dargestellt) angekoppelt.

Der Schlauch 23 des Glasfaserbündels ist eingefärbt.

In einer Ausführungsform der Erfindung ist der Schlauch 23 schwarz eingefärbt und erscheint so im unbeleuchteten Zustand schwarz, so dass er kaum von angrenzenden Bauelementen zu unterscheiden ist.

Denkbar ist aber auch eine andersfarbige Einfärbung, welche in etwa die gleiche Farbe hat wie eine angrenzende Aufnahme, insbesondere ein angrenzendes Verkleidungsteil.

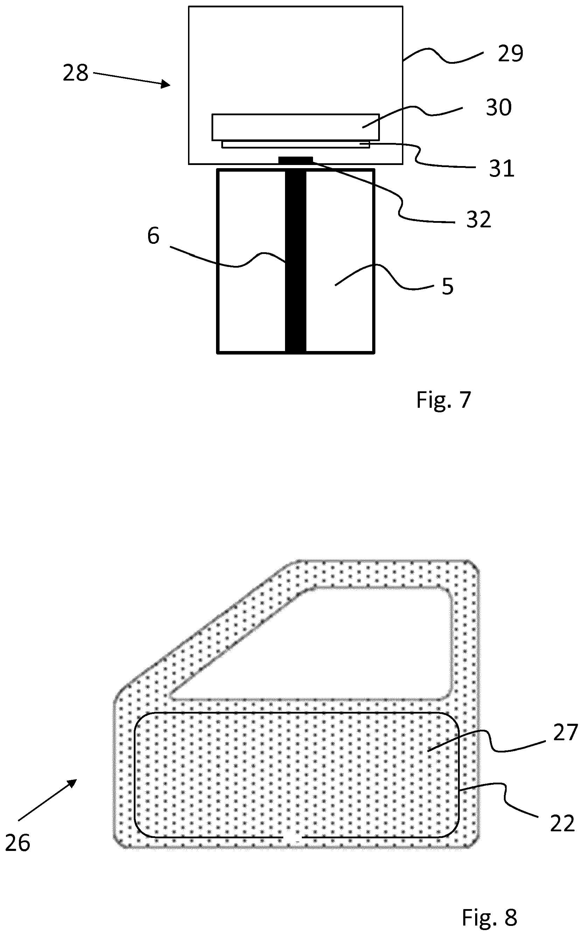

Fig. 7 zeigt in einer schematischen Darstellung, wie eine LED-Lichtquelle auch direkt an das Ende eines Lichtleiters 5 aus Glas angekoppelt ist.

Der Lichtleiter 5 aus Glas besteht in diesem Ausführungsbeispiel aus einem Glasstab mit einer Farbglasseele 6 (entsprechend der Ausführungsform gemäß Fig. 1 und Fig. 2).

Im Unterschied zu der in Fig. 1 und Fig. 2 dargestellten nicht erfindungsgegenständlichen Ausführungsform wird hier in diesem Ausführungsbeispiel eine LED-Leuchte 28 direkt an das Ende des Lichtleiters 5 gesetzt.

Die LED-Leuchte 28 umfasst ein Gehäuse 29.

In dem Gehäuse 29 ist eine Platine 30 mit einer LED_31, in diesem Ausführungsbeispiel ausgebildet als Dünnschicht-LED, angeordnet.

Gegenüber der Farbglasseele 6 umfasst das Gehäuse 29 eine Maskierung 32, durch welche die Farbglasseele 6 abgeschattet wird.

Hierdurch werden ebenfalls Inhomogenitäten in der Nähe der Einkoppelstelle reduziert.

Die Maskierung 32 kann beispielsweise ein dunkel eingefärbter Bereich in einem sonst transparenten Gehäuseboden sein. Im Falle eines unten offenen Gehäuses (nicht dargestellt) kann die Maskierung auch als Abdeckung bereitgestellt werden, welche über Stege mit Seitenwänden des Gehäuses verbunden ist.

Fig. 8 zeigt in einer schematischen Darstellung eine Fahrzeugtür 26, in welche als Ambientebeleuchtung ein seitenemittierendes Glasfaserkabel 22 eingesetzt ist.

Die Fahrzeugtür 26 umfasst hierfür innenseitig eine Verkleidung 27, beispielsweise aus einem Kunststoff. In die Verkleidung 27 ist eine Nut eingebracht, welche die Kontur der Ambientebeleuchtung vorgibt.

In diese Nut wird das Glasfaserkabel 22 eingeklemmt oder eingeklebt.

In einer Ausführungsform wird ein Glasfaserkabel 22 mit einem dunkel eingefärbten Schlauch verwendet. Vorzugsweise ist bei dieser Ausführungsform der Erfindung auch die angrenzende Verkleidung 27 schwarz oder dunkelgrau.

Im unbeleuchteten Zustand ist das Glasfaserkabel 22 so kaum zu erkennen, wohingegen bei Dunkelheit eine gut sichtbare und optisch ansprechende Ambientebeleuchtung bereitgestellt wird.

Bei Verwendung eines unbunt eingefärbten Schlauchs kann insbesondere auch eine RGB-Lichtquelle verwendet werden. Dies ermöglicht es auch, die Ambientebeleuchtung in der Lichtfarbe verändern zu können.

Bei einer anderen Ausführungsform der Erfindung ist der Schlauch bunt eingefärbt. Vorzugsweise ist bei dieser Ausführungsform der Erfindung auch die angrenzende Verkleidung 27 in etwa der gleichen Farbe ausgebildet, die dem Schlauch entspricht.

Es hat sich herausgestellt, dass bei dieser Ausführungsform der Erfindung lieber einer LED-Lichtquelle verwendet wird, deren Farbe der Farbe des Schlauchs angepasst ist, insbesondere eine LED-Lichtquelle mit lediglich einem einzigen Emissionsmaximum, also eine Lichtquelle, die vorzugsweise in einem engen Spektralbereich emittiert.

So lässt sich auch mit einem bunt eingefärbten Schlauch eine Ambientebeleuchtung mit homogenem Farbeindruck bereitstellen.

Bei allen Ausführungsformen kann die Rückseite des Schlauchs, also die dem Betrachter abgewandte Seite des Schlauchs des eingeklemmten oder eingeklebten Glasfaserkabels 22, als Reflexionsfläche ausgebildet sein. Dies kann durch ein coextrudiertes reflektierendes Material, durch eine Lackierung oder durch einen eingelegten Streifen eines reflektierenden Materials, beispielsweise eine Metallfolie, realisiert sein.

Bei dieser Ausführungsform der Erfindung ist es vorteilhaft, den Schlauch außen nicht genau kreisrund auszugestalten, um ein orientiertes Einbringen des Glasfaserkabels 22 in die Nut zu erleichtern. Insbesondere kann der Schlauch mit sich axial nach außen erstreckenden Vorsprüngen versehen sein, die eine Verdrehung des Schlauchs verhindern.

Durch die Erfindung konnten konturenscharfe Linienleuchten bereit gestellt werden, welche robust und wetterfest sind und gleichzeitig im unbeleuchteten Zustand kaum zu erkennen sind.

### Bezuqszeichenliste

- 1: Linienleuchte
- 2: Profil
- 3: Montageelement
- 4: Trittleiste
- 5: Lichtleiter aus Glas
- 6: Farbglasseele
- 7: Aussparung
- 8: Formschlusselement
- 9: Flügel
- 10: flexibler Lichtleiter
- 11: Hülse
- 12: Hülse
- 13: LED-Lichtquelle
- 14: Kabel
- 15: Kappe
- 16: Hüllmaterial
- 17: Glasfaserbündel
- 18: Hülse
- 19: Dorn
- 20: Boden
- 21: Fläche
- 22: Glasfaserkabel
- 23: Schlauch
- 24: Hülse
- 25: Öffnung
- 26: Fahrzeugtür
- 27: Verkleidung
- 28: LED-Leuchte
- 29: Gehäuse
- 30: Platine
- 31: LED
- 32: Maskierung

## Patentansprüche

1. Linienleuchte, umfassend ein seitenemittierendes Glasfaserkabel (22), wobei das Glasfaserkabel (22) in einem Schlauch (23) angeordnet ist, wobei der Schlauch (23) dunkel oder in einer von Schwarz verschiedenen unbunten Farbe eingefärbt ist, insbesondere im sichtbaren Bereich des Lichts eine mittlere Transmission von weniger als 40 %, vorzugsweise von weniger als 30 % aufweist.

2. Linienleuchte nach dem vorstehenden Anspruch, **dadurch gekennzeichnet, dass** das Material des Schlauchs (23) im L*a*b*-Farbraum einen L*-Wert von unter 40, vorzugsweise von unter 30, besonders bevorzugt von unter 15 hat.

3. Linienleuchte nach einem der vorstehenden Ansprüche, **dadurch gekennzeichnet, dass** der Schlauch (23) aus einem Kunststoff, insbesondere einem Polyethylen, Polypropylen oder aus einem Silikon oder aus PVC besteht.

4. Linienleuchte nach einem der vorstehenden Ansprüche, **dadurch gekennzeichnet, dass** der Schlauch durch eingemischte Rußpartikel schwarz eingefärbt ist.

5. Linienleuchte nach einem der Ansprüche 1 bis 3, **dadurch gekennzeichnet, dass** der Schlauch silbern eingefärbt ist.

6. Verkleidung (27), insbesondere Tür, Wand- oder Deckenverkleidung eines Fahrzeugs, umfassend eine Linienleuchte nach einem der vorstehenden Ansprüche.

7. Verkleidung (27) nach dem vorstehenden Anspruch, **dadurch gekennzeichnet, dass** der Schlauch (22) in eine Nut eingeklemmt oder eingeklebt ist.

8. Verkleidung (27) nach einem der vorstehenden Ansprüche, **dadurch gekennzeichnet, dass** die Rückseite des Schlauchs (22) eine Reflexionsfläche bildet.

9. Linienleuchte, umfassend ein seitenemittierendes Glasfaserkabel (22), wobei das Glasfaserkabel (22) in einem Schlauch (23) angeordnet ist, wobei der Schlauch in einer Farbe eingefärbt ist, welche der Farbe einer angrenzenden Aufnahme oder Verkleidung (27) entspricht.

10. Linienleuchte, insbesondere Linienleuchte nach dem vorstehenden Anspruch, umfassend ein seitenemittierendes Glasfaserkabel (22), wobei das Glasfaserkabel in einem Schlauch (23) angeordnet ist, wobei der Schlauch (23) bunt eingefärbt ist.

11. Linienleuchte nach dem vorstehenden Anspruch, **dadurch gekennzeichnet, dass** das Material des Schlauchs (22) im L*a*b*-Farbraum eine Buntheit C*_{ab} von größer 10, vorzugsweise größer 25 und besonders bevorzugt größer 30 hat.

12. Linienleuchte nach einem der drei vorstehenden Ansprüche, **dadurch gekennzeichnet, dass** die Linienleuchte eine Lichtquelle, insbesondere eine LED-Lichtquelle (13) umfasst, deren Wellenlänge an die Farbe des Schlauchs angepasst ist, insbesondere deren Wellenlänge die sich maximal 30 nm, vorzugsweise maximal 20 nm, von der Wellenlänge unterscheidet, die der Farbe des Schlauchs entspricht, wobei insbesondere im Spektrum der Lichtquelle die Standardabweichung σ in einem Intervall von +/- 50 nm, vorzugsweise +/- 25 nm, liegt

13. Linienleuchte, umfassend einen seitenemittierenden transparenten Lichtleiter aus Glas, welcher formschlüssig mittels eines Montageelements in einem Profil gehalten ist.

14. Linienleuchte, insbesondere Linienleuchte nach einem der vorstehenden Ansprüche, umfassend einen seitenemittierenden transparenten Lichtleiter aus Glas, welcher zumindest eine Farbglasseele zum seitlichen Auskoppeln von Licht umfasst, wobei der seitenemittierende transparente Lichtleiter mittels eines Glasfaserkabels an eine Lichtquelle angeschlossen ist, welches zumindest gegenüber dem seitenemittierenden Lichtleiter mittels einer Kappe terminiert ist, wobei die der Boden der Kappe gegenüber der Farbglasseele einen nach innen ragenden Dorn umfasst oder abgedeckt ist.

15. Linienleuchte, insbesondere Linienleuchte nach einem der vorstehenden Ansprüche, umfassend einen seitenemittierenden transparenten Lichtleiter aus Glas, welcher zumindest eine Farbglasseele zum seitlichen Auskoppeln von Licht umfasst, und wobei in zumindest ein Ende des seitenemittierenden Lichtleiters Licht eingekoppelt wird, vorzugsweise mittels einer direkt an das Ende des seitenemittierenden Lichtleiters angrenzenden Lichtquelle, **dadurch gekennzeichnet, dass** das Ende des seitenemittierenden Lichtleiters im Bereich der Farbglasseele maskiert ist.

16. Verwendung einer Linienleuchte nach einem der vorstehenden Ansprüche in oder an einem Fahrzeug, insbesondere einem Kraftfahrzeug, Schiff oder Flugzeug, insbesondere in einem Trittbrett, als Konturbeleuchtung in einem Möbelstück oder Bauteil oder einem medizinischen Gerät.
